# EUROPÄISCHE PATENTSCHRIFT

(11) **EP 2 182 337 B1**
(45) Veröffentlichungstag und Bekanntmachung des Hinweises auf die Patenterteilung: **22.03.2017**
(21) Anmeldenummer: 09013600.3
(22) Anmeldetag: 29.10.2009
(51) Int. Cl.: G01L 3/12, G01L 5/16

(54) **Verfahren zur berührungslosen Bestimmung von an einem hohlzylindrischen Körper angreifenden Kräften und/oder Momenten sowie eine Messanordnung zur Durchfürung des Verfahrens**
Method for the contactless determination of forces and/or torques acting on a hollow cylindrical body and a measuring system for carrying out the method
Procédé de détermination sans contact de forces et/ou de moments agissant sur un corps cylindrique creux et dispositif de mesure pour l'exécution du procédé

(30) Priorität: 30.10.2008 DE 102008054028
(43) Veröffentlichungstag der Anmeldung: 05.05.2010
(73) Patentinhaber: AIRBUS HELICOPTERS DEUTSCHLAND GmbH, 86609 Donauwörth (DE)
(72) Erfinder: Doleschel, Andreas, 85653 Aying/Grosshelfendorf (DE); Wagner, Wolfgang, 84416 Inning am Holz (DE); Wurzel, Georg, 82008 Unterhaching (DE)
(74) Vertreter: GPI & Associés

(56) Entgegenhaltungen:
- DE-A1- 3 804 389
- US-A- 4 863 274
- US-A1- 2005 253 051

## Beschreibung

Die Erfindung betrifft ein Verfahren zur berührungslosen Bestimmung von an einem hohlzylindrischen Körper angreifenden Kräften und/oder Momenten gemäß dem Patentanspruch 1 sowie eine Messanordnung zur Durchführung des Verfahrens gemäß der im Oberbegriff des Patentanspruches 4 angegebenen Art.

Obwohl das erfindungsgemäße Verfahren sowie die erfindungsgemäße Messanordnung prinzipiell für eine Vielzahl von verschiedenen Anwendungsbereichen einsetzbar ist, wird nachfolgend deren Einsatz als Mastmomentenmesssystem (MMS), das heißt als ein System zur Bestimmung der an einem Hauptrotormast eines Hubschraubers wirkenden Biegemomente, näher betrachtet.

Bei einer gelenklosen Konstruktion des Hubschrauberrotorkopfes in Verbindung mit teilelastischen Rotorblättern aus Faserverbundwerkstoff werden aufgrund des größeren virtuellen Gelenkabstands hohe Biegemomente in den Rotormast eingeleitet. Zu hohe Biegemomente können zu einer frühzeitigen Ermüdung des Rotormasts oder einer Beschädigung von Getriebeteilen führen. Daher wird das Mastmoment im Flugbetrieb mit einem Mastmomentensystem (MMS) überwacht. Das Moment, bzw. der Anteil vom maximal zulässigen Moment, wird dem Piloten im Cockpit angezeigt. Die Überschreitung festgelegter Grenzwerte im Betrieb führt zu Wartungsarbeiten und soll vermieden werden.

Stand der Technik ist es heute, das Mastmoment mit Hilfe von Dehnmessstreifen zu messen (DMS), die im oberen Teil des Rotormasts mittels einer Klebeverbindung eingeklebt sind.

Im Betrieb sind die DMS und die Klebeverbindung dynamischen Belastungen und schwankenden Umgebungsbedingungen (Temperatur, Vibrationen, Feuchtigkeit) ausgesetzt und dadurch stark beansprucht. Bei einem Defekt eines DMS ist eine Reparatur aufgrund der schlechten Zugänglichkeit der DMS im Inneren des Rotormasts und aufgrund des aufwändigen Klebeverfahrens sehr zeit- und kostenintensiv.

Die Dokumente US4863274 und DE3804389 offenbaren Verfahren und Vorrichtungen zur berührungslosen Bestimmung von an einem hohlzylindrischen Körper angreifenden Kräften oder Momenten.

Der Erfindung liegt die Aufgabe zugrunde ein Verfahren und eine Vorrichtung zur berührungslosen Bestimmung von an einem hohlzylindrischen Körper angreifenden Kräften/Momenten zur Verfügung zu stellen, welches wenig störanfällig gegenüber Umgebungsbedingen ist.

Diese Aufgabe wird verfahrensgemäß durch den Patentanspruch 1 gelöst. Patentanspruch 4 beschreibt die Merkmale der Messanordnung zur Durchführung des erfindungsgemäßen Verfahrens.

Die Unteransprüche stellen vorteilhafte Weiterbildungen der Erfindung dar. Nach dem erfindungsgemäßen Verfahren werden die an einem hohlzylindrischen Körper angreifenden Kräfte und/Momente berührungslos bestimmt. Hierfür wird mittels einer Lichtquelle Lichtstrahlung im Inneren des hohlzylindrischen Körpers erzeugt und es werden mittels eines optoelektronischen Sensors Messsignale aufgezeichnet. Die von dem optoelektronischen Sensor aufgezeichneten Messsignale werden einer Signalverarbeitungseinheit zugeführt. Von der Signalverarbeitungseinheit werden Änderungen der Messsignale gegenüber einem zuvor durch eine Kalibrierung bestimmten Ausgangszustand, entsprechend dem unverformten Ausgangszustand des hohlzylindrischen Körpers, detektiert und ausgegeben. Bei Vorliegen einer mechanischen Verformung des hohlzylindrischen Körpers wird von der Signalverarbeitungseinheit gemäß einer Kalibrierfunktion oder einer Rechenvorschrift ein Ausgangssignal ausgegeben, welches die, die mechanische Verformung des hohlzylindrischen Körpers bewirkenden Kräfte und/oder Momente beschreibt. Die Bestimmung der Kräfte und/oder Momente wird an einem drehenden hohlzylindrischen Körper durchgeführt. Hierbei sind der zur Messung benötigte Photodetektor und ein Lasermodul auf einem den hohlzylindrischen Körper verschließenden Deckel angeordnet.

Aufgrund der Verwendung von Licht als Messgröße für die berührungslose Bestimmung ist in vorteilhafter Weise das erfindungsgemäße Verfahren unabhängig gegenüber Umgebungsbedingen wie z.B. Temperatur, Vibrationen, Feuchtigkeit oder Dergleichen.

Vorzugsweise wird der Zusammenhang zwischen der Verformung des hohlzylindrischen Körpers und den die Verformung bewirkenden Kräften und/oder Momenten mittels einer experimentell bestimmten Kalibrierfunktion oder mittels einer analytischen oder numerischen Rechenvorschrift bestimmt.

Vorzugsweise wird im Rahmen des Verfahrens gemäß der Erfindung, mittels der Signalverarbeitungseinheit, die Messung der Messsignale mit einer digitalen Bildverarbeitung durchgeführt.

Die erfindungsgemäße Messanordnung zur berührungslosen Bestimmung von an einem hohlzylindrischen Körper angreifenden Kräften und/oder Momenten, umfasst einen optoelektronischen Detektor, eine Lichtquelle, eine Signalverarbeitungseinheit, eine Energiequelle sowie Mittel zur Signal- und/oder Spannungsversorgung zwischen der Energiequelle, der Signalverarbeitungseinheit, der Lichtquelle sowie dem optoelektronischen Detektor. Der optoelektronische Detektor ist als ein Photodetektor und die Lichtquelle als ein Lasermodul mit integrierter Laserdiode ausgebildet. Der Photodetektor und das Lasermodul sind dabei jeweils im Inneren des hohlzylindrischen Körpers angeordnet, nämlich der Photodetektor an einem ersten, oberen Ende und das Lasermodul am gegenüberliegenden, unteren Ende des hohlzylindrischen Körpers. Ein von dem Lasermodul emittierter Lichtstrahl ist dabei unmittelbar auf den Photodetektor ausgerichtet. Der Photodetektor und das Lasermodul sind jeweils auf einem, den hohlzylindrischen Körper verschließenden Deckel angeordnet. Die als Lasersystem konzipierte Messanordnung zeichnet sich insbesondere durch eine hohe Präzision (µm) und Messgeschwindigkeit (kHz) aus. In konstruktiver Hinsicht erweist sich obige Messanordnung als vorteilhaft, da aufgrund der Integration aller Bauteile im Inneren des hohlzylindrischen Körpers eine beidseitige Abdichtung des hohlzylindrischen Körpers ermöglicht ist. Darüber hinaus sind dabei sowohl der Photodetektor als auch das Lasermodul, die auf den entsprechenden, das obere und untere Ende des hohlzylindrischen Körpers verschließenden Deckeln angeordnet sind, im Falle einer Wartung einfach zugänglich.

Gemäß einer besonders vorteilhaften Ausführungsform der Messanordnung ist an einem Ende des hohlzylindrischen Körpers ein Muster/Raster angeordnet und der optoelektronische Detektor ist als eine Kamera mit CCD- oder CMOS-Sensor ausgebildet. Die Lichtquelle ist innerhalb oder außerhalb und die Kamera ist außerhalb des hohlzylindrischen Körpers angeordnet. Diese Ausführungsform erweist sich als besonders vorteilhaft, da die Anforderungen an die Positionierung und Ausrichtung der Kamera sowie der Lichtquelle wesentlich geringer als bei den Lasersystemen sind.

Gemäß einer Ausführungsform ist dabei die Lichtquelle innerhalb des hohlzylindrischen Körpers angeordnet und bildet mit dem Muster/Raster eine Baueinheit.

In einer besonders vorteilhaften Ausführungsform ist das Muster/Raster selbstleuchtend ausgebildet, beispielsweise aus Tritium. Diese Ausführungsform ist besonders wartungsarm, und es wird keine aktive Lichtquelle benötigt.

Entsprechend einer weiteren Ausführungsform der erfindungsgemäßen Messanordnung weist die Signalverarbeitungseinheit eine digitale Bildverarbeitungseinheit auf.

Vorzugsweise wird die erfindungsgemäße Messanordnung für die Bestimmung des Mastmomentes des Hauptrotormastes eines Drehflügelflugzeugs verwendet.

Nach einer Ausführungsform der erfindungsgemäßen Messanordnung ist der optoelektronische Detektor als ein Photodetektor und die Lichtquelle als ein Lasermodul mit integrierter Laserdiode ausgebildet, wobei der Photodetektor und das Lasermodul an einem ersten Ende des hohlzylindrischen Körpers, auf einem den hohlzylindrischen Körper verschließenden Deckel angeordnet sind, wobei der Photodetektor und das Lasermodul im Innern des hohlzylindrischen einem den hohlzylindrischen Körper verschließenden Deckel angeordnet sind, wobei der Photodetektor und das Lasermodul im Innern des hohlzylindrischen Körpers angeordnet sind, wobei ein Kollimator an einem gegenüberliegenden Ende, im Innern des hohlzylindrischen Körpers angeordnet ist, wobei der Kollimator mittels einer Glasfaser mit dem Lasermodul verbunden ist. Vorzugsweise ist der Kollimator in einer Buchse im Innern des hohlzylindrischen Körpers zur Ausrichtung des Kollimators aufgenommen.

Weitere Vorteile, Merkmale und Anwendungsmöglichkeiten der Erfindung ergeben sich aus der nachfolgenden Beschreibung in Verbindung mit den in der Zeichnung dargestellten Ausführungsbeispielen.

In der Beschreibung, in den Patentansprüchen, in der Zusammenfassung und in der Zeichnung werden die in der unten aufgeführten Liste der Bezugszeichen verwendeten Begriffe und zugeordnete Bezugszeichen verwendet. In der Zeichnung bedeuten:
- Fig. 1: eine schematische Darstellung eines Hauptrotormasts eines Hubschraubers mit einer erfindungsgemäßen Messanordnung zur Bestimmung des Biegemoments gemäß einer ersten Ausführungsform;
- Fig. 2: der Hauptrotormast aus Fig. 1 mit einer zweiten Ausführungsform der erfindungsgemäßen Messanordnung;
- Fig. 3: der Hauptrotormast aus Fig. 1 mit einer dritten Ausführungsform der erfindungsgemäßen Messanordnung;
- Fig. 4: eine Variation der Messanordnung aus Fig. 3, und
- Fig. 5: eine schematische Darstellung des Rotormasts aus Fig. 3 oder 4 zur Erläuterung der Bestimmung des Torsionsmoments,
- Fig. 6: der Hauptrotormast aus Fig. 1 mit einer weiteren Ausführungsform der erfindungsgemäßen Messanordnung.

In der nachfolgenden Beschreibung und in den Figuren werden zur Vermeidung von Wiederholungen gleiche Komponenten auch mit gleichen Bezugszeichen gekennzeichnet, sofern keine weitere Differenzierung erforderlich oder sinnvoll ist.

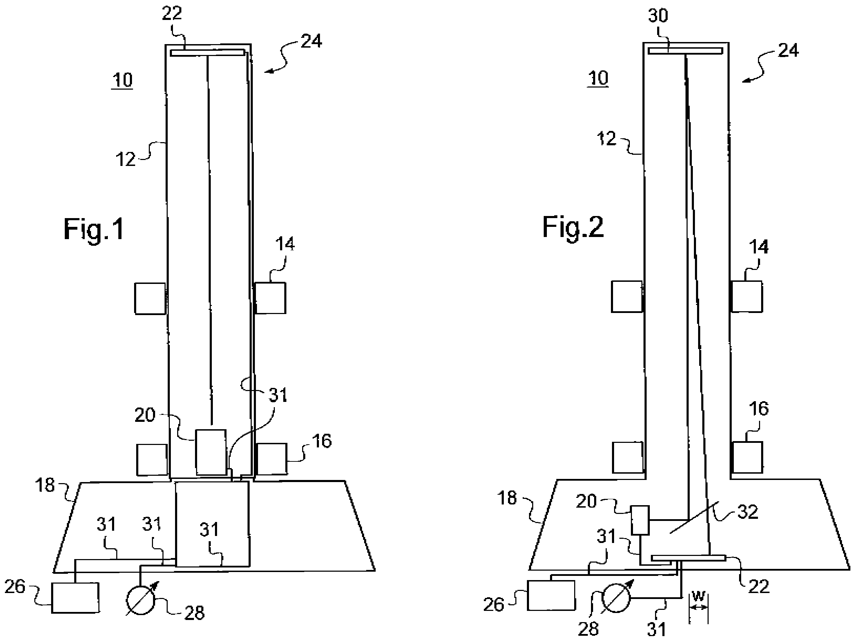

Fig. 1 zeigt mehr oder minder schematisch einen insgesamt mit der Bezugsziffer 10 bezeichneten Hauptrotormast im Getriebe eines Hubschraubers. Der Hauptrotormast 10 umfasst im Wesentlichen einen als Hohlkörper ausgebildeten Rotormast 12, der über ein oberes Mastlager 14 und ein unteres Mastlager 16 drehbar gelagert ist. Auf eine explizite Darstellung des Getriebes wurde vorliegend aus Gründen der Übersichtlichkeit verzichtet. Stattdessen ist mit Bezugsziffer 18 schematisch der Bauraum bzw. Freiraum innerhalb des Getriebes bezeichnet.

Im Innern des Rotormasts 12 ist eine Lichtquelle in Form eines eine integrierte Laserdiode aufweisenden Lasermoduls 20 sowie ein optoelektronischer Sensor in Form eines Photodetektors 22 angeordnet. Der Photodetektor 22 ist an einem ersten Ende 24 des Rotormasts 12 und das Lasermodul 20 im Bereich des gegenüberliegenden, dem Bauraum bzw. Freiraum 18 zugewandten Ende des Rotormasts 12 angeordnet. Das Lasermodul 20 ist dabei so im Rotormast 12 angeordnet, dass ein von dem Lasermodul 20 emittierter Lichtstrahl parallel zu der Drehachse des Rotormasts 12 verlaufend auf den Photodetektor 22 ausgerichtet ist.

Als weitere Komponenten sind außerhalb des Rotormasts 12 eine Signalverarbeitungseinheit 26 sowie eine Energiequelle 28 vorgesehen. Über entsprechend angeordnete Mittel zur Signal- und/oder Spannungsversorgung 31 ist eine Signal- bzw. Spannungsversorgung zwischen Lasermodul 20, Photodetektor 22, Signalverarbeitungseinheit 26 und Energiequelle 28 gewährleistet.

Der Photodetektor 22 am ersten Ende 24 des Rotormasts 12 registriert den Einfallsort des Lichtstrahls. Bei einer beispielsweise durch ein am ersten Ende 24 des Rotormasts 12 angreifendes Biegemoment bedingten Verformung des Rotormasts 12 wandert der Photodetektor 22 relativ zum Lichtstrahl und damit der Lichtpunkt auf der Oberfläche des Photodetektors 22. Aus den Ausgangssignalen des Photodetektors 22 wird mittels der Signalverarbeitungseinheit 26 und mittels einer Kalibrierfunktion oder eines analytischen oder numerischen Verfahrens das angreifende Biegemoment abgeleitet.

Prinzipiell erlaubt obige Messanordnung auch die Bestimmung der Richtung der Verschiebung. Auf die hierfür noch notwendigen Elemente, wie z. B. magnetischer Taktgeber zur Synchronisation, wurde vorliegend aus Gründen der Übersichtlichkeit verzichtet.

Bei der in Fig. 2 dargestellten Ausführungsform sind das Lasermodul 20 und der Photodetektor 22 außerhalb des Rotormasts 12, nämlich im Bauraum bzw. Freiraum 18 innerhalb des Getriebes angeordnet. Im Innern des Rotormasts 12 ist lediglich am ersten Ende 24 des Rotormasts 12 ein Spiegel 30 angeordnet. Zudem ist im Bereich des Lasermoduls 20 ein weiterer Reflektor in Form eines halbdurchlässigen Spiegels 32 angeordnet.

Der von dem Lasermodul 20 emittierte Lichtstrahl wird über den halbdurchlässigen Spiegel 32 auf den im Rotormast 12 angeordneten Spiegel 30 umgelenkt. Der von dem Spiegel 30 reflektierte Lichtstrahl trifft nach Durchtritt des halbdurchlässigen Spielgels 32 auf die Oberfläche des Photodetektors 22 auf.

Der Abstand w auf dem Photodetektor 22 ist abhängig von dem Biegewinkel. Anhand dessen können dann mit Hilfe der Signalverarbeitungseinheit sowie der Kalibrierfunktion bzw. des verwendeten numerischen oder analytischen Verfahrens die weiteren Größen, wie Verschiebung, Kräfte, Momente etc. abgeleitet werden.

Aufgrund der Anordnung von Lasermodul 20 und Photodetektor 22 außerhalb des rotierenden Rotormasts 12 kann in vorteilhafter Weise auf eine Signalübertragung zwischen rotierenden und nicht-rotierenden Komponenten verzichtet werden. Vorteilhaft ist zudem die vereinfachte Zugänglichkeit der Komponenten Lasermodul 20 und Photodetektor 22 von einer Seite des Rotormasts 12 sowie die vereinfachte Kabelführung.

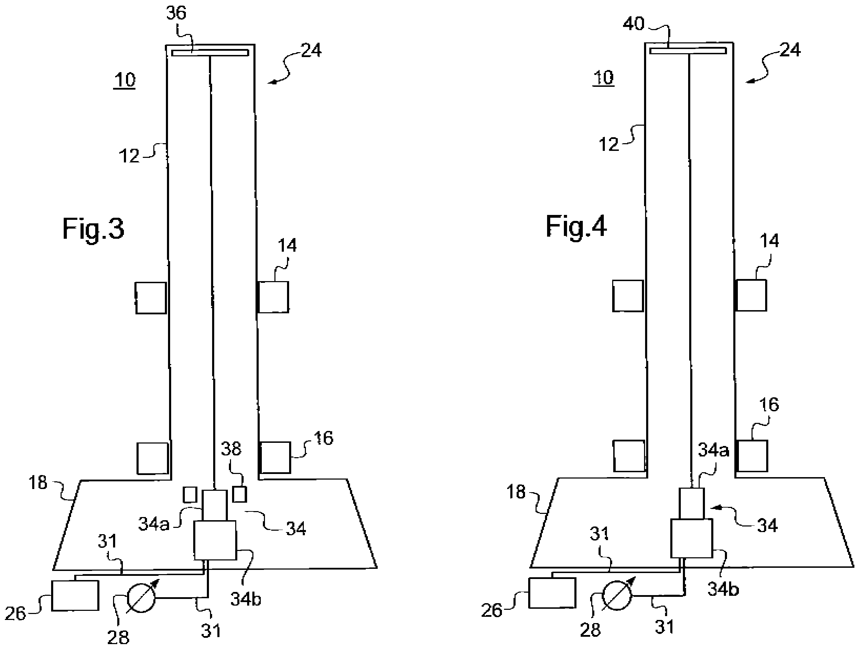

Bei der in Fig. 3 dargestellten Ausführungsform ist der optoelektronische Detektor in Form einer Kamera 34 mit CCD- oder CMOS-Sensor ausgebildet und im Inneren des Rotormasts 12 ist am ersten Ende 24 des Rotormasts 12 ein Muster/Raster 36 angeordnet. In bekannter Art und Weise weist die Kamera 34 ein Kameraobjektiv 34a und ein den CCD- oder CMOS-Sensor aufnehmendes Kameragehäuse 34b auf.

Zur Beleuchtung des Musters/Rasters 36 ist eine Lichtquelle, beispielsweise in Form einer LED-Ringleuchte 38 angeordnet. Kamera 34 und LED-Leuchten 38 sind jeweils im Bauraum bzw. Freiraum 18 angeordnet.

Das Muster/Raster 36 wird in regelmäßigen Abständen von der Kamera 34 fotografiert. Die Signalverarbeitungseinheit 26, die gemäß dem vorliegenden Ausführungsbeispiel insbesondere auch eine digitale Bildverarbeitungseinheit umfasst, wertet die Bilder aus und ermittelt anhand eines Vergleichs der Bildfolgen eine Bewegung des Musters/Rasters 36 und damit eine Verformung des Rotormasts 12.

Aus der Verformung werden dann wiederum mittels des analytischen oder numerischen Verfahrens die am Rotormast 12 angreifenden Kräfte und Momente, die die Verformung bedingen, berechnet.

Vorteilhaft an dieser Ausführungsform ist insbesondere der einfache mechanische Aufbau. Alle Komponenten sind unterhalb des Rotormasts 12 angeordnet und somit für die Wartung leicht zugänglich.

Bei der in Fig. 4 dargestellten Ausführungsform ist im Gegensatz zu der in Fig. 3 gezeigten Ausführungsform keine separate Lichtquelle 38 erforderlich, da das Muster/Raster 40 selbstleuchtend, aus Tritium ausgebildet ist.

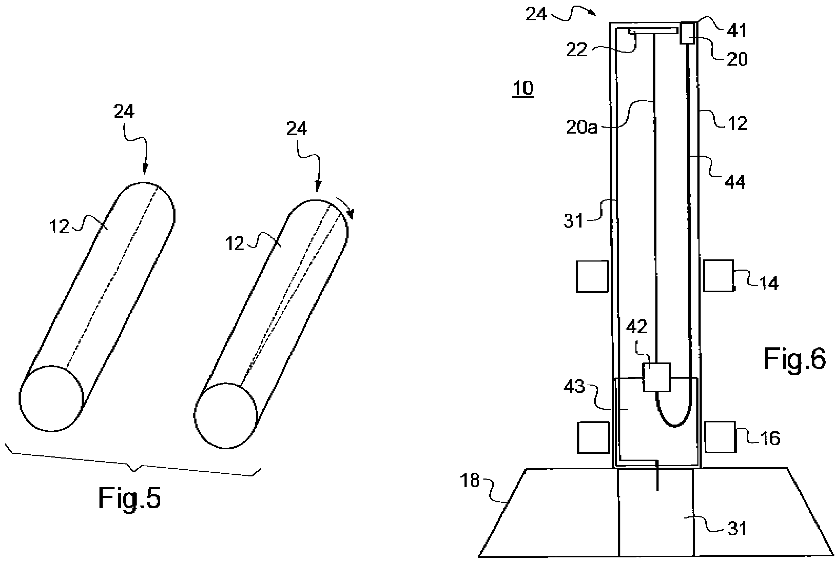

Wie in Fig. 5 schematisch dargestellt, erlauben die Kamera basierten Ausführungsformen, vgl. Fig. 3 und Fig. 4, auch die Ermittlung der Verdrillung, aus der sich das Torsionsmoment analytisch ermitteln lässt:
Wird der Rotormast 12 mit einem Torsionsmoment beaufschlagt, verdrillt sich das erste Ende 24 relativ zum gegenüberliegenden Ende. Werden nun die Bildfolgen der Kamera 34 so synchronisiert, dass sich das dem ersten Ende 24 gegenüberliegende Ende des Rotormasts 12 in jeder Bildaufnahme stets an gleicher Position (d.h. in gleicher Phasenlage) befindet, beispielsweise wenn die Bildfrequenz gleich der Drehfrequenz ist, kann anhand der Lage des Musters/Rasters 36 bzw. 40 am Ende 24 die Verdrillung abgeleitet werden.

Bei der in Fig. 6 dargestellten Ausführungsform ist der optoelektronische Detektor als ein Photodetektor 22 und die Lichtquelle als ein Lasermodul 20 mit integrierter Laserdiode ausgebildet. Der Photodetektor 22 und das Lasermodul 20 sind an einem ersten Ende 24 des hohlzylindrischen Körpers 12, auf einem den hohlzylindrischen Körper 12 verschließenden Deckel 41 angeordnet. Der Photodetektor 22 und das Lasermodul 20 sind im Innern des hohlzylindrischen Körpers 12 angeordnet.

Ein Kollimator 42 ist an einem gegenüberliegenden Ende, im Innern des hohlzylindrischen Körpers 12 angeordnet, und ist mittels einer Glasfaser 44 mit dem Lasermodul 20 verbunden. Der Kollimator 42 dient zur Fokussierung eines Laserstrahls 20a.

Der Kollimator 42 ist vorzugsweise in einer Buchse 43 im Innern des hohlzylindrischen Körpers 12 zur Ausrichtung des Kollimators 42 aufgenommen. Die Signalübertragung und die Stromversorgung erfolgt wie im Ausführungsbeispiel aus Figur 1.

Beispielsweise kann die Signalverarbeitung wie im Ausführungsbeispiel aus Figur 1 durchgeführt werden.

Im Ausführungsbeispiel aus Figur 6 sind somit alle aktiven Komponenten an dem ersten Wellenende (oberes erstes Ende des Körpers 12) angebracht und sind deshalb über den Deckel 41 gut zugänglich ggf. mit dem Deckel abnehmbar. Außerdem ergibt sich eine Verlagerung der aktiven Komponenten weg vom heißen unteren Wellenende (unteres Ende des Körpers 12), hin zum kühleren oberen und ersten Wellenende, zum Beispiel bei Anwendungen innerhalb von Getrieben mit hohen Temperaturen.

Erfindungsgemäß kann der hohlzylindrische Körper 12, zum Beispiel eine Welle, bzw. ein Mast, an beiden Enden mit Deckeln gegenüber Umwelteinflüssen abgedichtet sein.

### Bezugszeichenliste:

- 10: Hauptrotormast
- 12: halbzylindrischer Körper/Rotormast
- 14: oberes Mastlager
- 16: unteres Mastlager
- 18: Freiraum/Bauraum im Getriebe
- 20: Lasermodul mit integrierter Laserdiode
- 20a: Laserstrahl
- 22: Photodetektor
- 24: erstes Ende des hohlzylindrischen Körpers
- 26: Signalverarbeitungseinheit
- 28: Energiequelle
- 30: Spiegel
- 31: Mittel zur Signal- und/oder Spannungsversorgung
- 32: Reflektor
- 34: Kamera
- 34a: Kameraobjektiv
- 34b: Kameragehäuse
- 36: Muster/Raster
- 38: LED
- 40: selbstleuchtendes Muster/Raster
- 41: Deckel
- 42: Kollimator
- 43: Buchse
- 44: Glasfaser

- w: Abstand auf Photodetektor

## Patentansprüche

1. Verfahren zur berührungslosen Bestimmung von an einem hohlzylindrischen Körper (12) angreifenden Kräften und/oder Momenten, bei dem
- mittels einer Lichtquelle (20; 38; 40) Lichtstrahlung im Inneren des hohlzylindrischen Körpers (12) erzeugt wird;
- mittels eines optoelektronischen Sensors (22; 34) Messsignale aufgezeichnet werden;
- die von dem optoelektronischen Sensor (22; 34) aufgezeichneten Messsignale einer Signalverarbeitungseinheit (26) zugeführt werden;
- von der Signalverarbeitungseinheit (26) Änderungen der Messsignale gegenüber einem zuvor durch eine Kalibrierung bestimmten Ausgangszustand, entsprechend dem unverformten Ausgangszustand des hohlzylindrischen Körpers (12), detektiert und ausgegeben werden;
- mittels der Signalverarbeitungseinheit (26) bei Vorliegen einer mechanischen Verformung des hohlzylindrischen Körpers (12) gemäß einer Kalibrierfunktion oder einer Rechenvorschrift ein Ausgangssignal ausgegeben wird, welches die, die mechanische Verformung des hohlzylindrischen Körpers (12) bewirkenden Kräfte und/oder Momente beschreibt, wobei die Bestimmung der Kräfte und/oder Momente an einem drehenden hohlzylindrischen Körper (12) durchgeführt wird und durch die Benutzung eines Photodetektors (22) und eines Lasermoduls (20), die jeweils auf einem den hohlzylindrischen Körper (12) verschließenden Deckel angeordnet sind.

2. Verfahren nach Anspruch 1, **dadurch gekennzeichnet, dass** ein Zusammenhang zwischen der Verformung des hohlzylindrischen Körpers (12) und den die Verformung bewirkenden Kräften und/oder Momenten mittels einer experimentell bestimmten Kalibrierfunktion oder mittels einer analytischen oder numerischen Rechenvorschrift bestimmt wird.

3. Verfahren nach Anspruch 1, **dadurch gekennzeichnet, dass** mittels der Signalverarbeitungseinheit (26) die Messung der Messsignale mit einer digitalen Bildverarbeitung durchgeführt wird.

4. Messanordnung zur Durchführung des Verfahrens nach einem der vorgenannten Ansprüche, umfassend
- einen optoelektronischen Detektor (22; 34),
- eine Lichtquelle (20; 38; 40);
- eine Signalverarbeitungseinheit (26);
- eine Energiequelle (28), sowie
- Mittel zur Signal- und/oder Spannungsversorgung (31) zwischen der Energiequelle (28), der Signalverarbeitungseinheit (26), der Lichtquelle (20; 38; 40) und dem optoelektronischen Detektor (22; 34).,
wobei der optoelektronische Detektor als ein Photodetektor (22) und die Lichtquelle als ein Lasermodul (20) mit integrierter Laserdiode ausgebildet ist, wobei der Photodetektor (22) an einem ersten Ende (24) des hohlzylindrischen Körpers (12) und das Lasermodul (20) an einem gegenüberliegenden Ende, jeweils im Innern des hohlzylindrischen Körpers (12) angeordnet sind und ein von dem Lasermodul (20) emittierter Lichtstrahl unmittelbar auf den Photodetektor (22) ausgerichtet ist und dass der Photodetektor (22) und das Lasermodul (20) jeweils auf einem, den hohlzylindrischen Körper (12) verschließenden Deckel angeordnet sind.

5. Messanordnung nach Anspruch 4, **dadurch gekennzeichnet, dass** die Signalverarbeitungseinheit (26) eine digitale Bildverarbeitungseinheit aufweist.

6. Messanordnung nach Anspruch 4; **dadurch gekennzeichnet, dass** der optoelektronische Detektor als ein Photodetektor (22) und die Lichtquelle als ein Lasermodul (20) ausgebildet und jeweils außerhalb des hohlzylindrischen Körpers (12) angeordnet sind, und dass im Innern am ersten Ende (24) des hohlzylindrischen Körpers ein Spiegel (30) angeordnet ist, wobei Photodetektor (22), Lasermodul (20) und Spiegel (30) derart zueinander angeordnet sind, dass ein von dem Lasermodul (20) emittierter Lichtstrahl erst nach Reflektion am Spiegel (30) auf den Photodetektor (22) auftritt.

7. Messanordnung nach Anspruch 6, **dadurch gekennzeichnet, dass** im Bereich des Lasermoduls (20) ein weiterer Reflektor (32) angeordnet ist, über den ein von dem Lasermodul (20) emittierter Lichtstrahl auf den Spiegel (30) umlenkbar ist.

8. Messanordnung nach Anspruch 4, **dadurch gekennzeichnet, dass** an einem Ende (24) im Inneren des hohlzylindrischen Körpers (12) ein Muster/Raster (36) angeordnet ist und der optoelektronische Detektor als eine Kamera (34) mit CCD- oder CMOS-Sensor ausgebildet ist, wobei die Lichtquelle (38) innerhalb oder außerhalb und die Kamera (34) außerhalb des hohlzylindrischen Körpers (12) angeordnet ist.

9. Messanordnung nach Anspruch 8, **dadurch gekennzeichnet, dass** die Lichtquelle (40) innerhalb des hohlzylindrischen Körpers (12) angeordnet ist, und die Lichtquelle und das Muster/Raster eine Baueinheit bilden.

10. Messanordnung nach Anspruch 9, **dadurch gekennzeichnet, dass** das Muster/Raster aus einem selbstleuchtenden Material ausgebildet ist.

11. Messanordnung nach Anspruch 10, **dadurch gekennzeichnet, dass** das Muster/Raster aus Tritium ausgebildet ist.

12. Messanordung nach Anspruch 4, **dadurch gekennzeichnet dass** der optoelektronische Detektor als ein Photodetektor (22) und die Lichtquelle als ein Lasermodul (20) mit integrierter Laserdiode ausgebildet ist, wobei der Photodetektor (22) und das Lasermodul (20) an einem ersten Ende (24) des hohlzylindrischen Körpers (12), auf einem den hohlzylindrischen Körper (12) verschließenden Deckel (41) angeordnet sind, wobei der Photodetektor (22) und das Lasermodul (20) im Innern des hohlzylindrischen Körpers (12) angeordnet sind, und dass ein Kollimator (42) an einem gegenüberliegenden Ende, im Innern des hohlzylindrischen Körpers (12) angeordnet ist, wobei der Kollimator (42) mittels einer Glasfaser (44) mit dem Lasermodul (20) verbunden ist.

13. Messanordung nach Anspruch 12, **dadurch gekennzeichnet, dass** der Kollimator (42) in einer Buchse (43) im Innern des hohlzylindrischen Körpers (12) zur Ausrichtung des Kollimators (42) aufgenommen ist.

14. Drehflügelflugzeug mit einer Messanordnung nach einem der Ansprüche 4 bis 13, **dadurch gekennzeichnet, dass** die Messanordnung für eine Bestimmung des Mastmoments des Hauptrotormastes verwendet wird.

## Claims

1. Method for contactless determination of forces and/or moments acting on a hollow cylindrical body (12), in which
- by means of a light source (20; 38; 40), light radiation is produced inside of the hollow cylindrical body (12);
- measurement signals are recorded by means of an optoelectronic sensor (22; 34);
- the measurement signals recorded by the optoelectronic sensor (22; 34) are supplied to a signal processing unit (26) ;
- the signal processing unit (26) detects and outputs changes of the measurement signals relative to an initial state determined beforehand by calibration, corresponding to the initial undeformed state of the hollow cylindrical body (12);
- when a mechanical deformation of the hollow cylindrical body (12) is present, the signal processing unit (26) outputs an output signal according to a calibration function or a calculation rule, which describes the forces and/or moments that are causing the mechanical deformation of the hollow cylindrical body (12), wherein determination of the forces and/or moments is carried out on a rotating hollow cylindrical body (12) and by using a photodetector (22) and a laser module (20) which are each located on a cover that closes the hollow cylindrical body (12).

2. Method according to claim 1, **characterised in that** a relationship between the deformation of the hollow cylindrical body (12) and the forces and/or moments causing the deformation is determined by means of an experimentally determined calibration function or by means of an analytical or numerical calculation rule.

3. Method according to claim 1, **characterised in that** the measurement signals are measured by means of the signal processing unit (26) with digital image processing.

4. Measurement arrangement for implementing the method according to one of the preceding claims, comprising
- an optoelectronic detector (22; 34),
- a light source (20; 38; 40);
- a signal processing unit (26);
- an energy source (28), and
- means for signal and/or voltage supply (31) between the energy source (28), the signal processing unit (26), the light source (20; 38; 40) and the optoelectronic detector (22; 34),
wherein the optoelectronic detector is designed as a photodetector (22), and the light source is designed as a laser module (20) with an integrated laser diode, wherein the photodetector (22) is arranged on a first end (24) of the hollow cylindrical body (12) and the laser module (20) is arranged on an opposite end, each inside of the hollow cylindrical body (12), and a light beam emitted from the laser module (20) is aligned directly to the photodetector (22), and wherein the photodetector (22) and the laser module (20) are each located on a cover that closes the hollow cylindrical body (12).

5. Measurement arrangement according to claim 4, **characterised in that** the signal processing unit (26) comprises a digital image processing unit.

6. Measurement arrangement according to claim 4, **characterised in that** the optoelectronic detector is designed as a photodetector (22) and the light source is designed as a laser module (20), each being arranged outside of the hollow cylindrical body (12), and **in that** there is a mirror (30) arranged inside on the first end (24) of the hollow cylindrical body, wherein the photodetector (22), the laser module (20) and the mirror (30) are arranged relative to one another such that a light beam emitted by the laser module (20) is incident on the photodetector (22) only after reflection on the mirror (30).

7. Measurement arrangement according to claim 6, **characterised in that** another reflector (32) is arranged in the region of the laser module (20), via which a light beam emitted from the laser module (20) can be deflected onto the mirror (30).

8. Measurement arrangement according to claim 4, **characterised in that** a pattern/grid (36) is arranged on one end (24) inside of the hollow cylindrical body (12), and the optoelectronic detector is designed as a camera (34) with a CCD or CMOS sensor, wherein the light source (38) is arranged inside or outside and the camera (34) is arranged outside of the hollow cylindrical body (12).

9. Measurement arrangement according to claim 8, **characterised in that** the light source (40) is arranged inside of the hollow cylindrical body (12), and the light source and the pattern/grid form a constructional unit.

10. Measurement arrangement according to claim 9, **characterised in that** the pattern/grid is made from a self-illuminating material.

11. Measurement arrangement according to claim 10, **characterised in that** the pattern/grid is made from tritium.

12. Measurement arrangement according to claim 4, **characterised in that** the optoelectronic sensor is designed as a photodetector (22) and the light source is designed as a laser module (20) with an integrated laser diode, wherein the photodetector (22) and the laser module (20) are arranged on a first end (24) of the hollow cylindrical body (12), on a cover (41) that closes the hollow cylindrical body (12), wherein the photodetector (22) and the laser module (20) are arranged inside of the hollow cylindrical body (12), and **in that** a collimator (42) is arranged on an opposite end, inside of the hollow cylindrical body (12), wherein the collimator (42) is connected to the laser module (20) by means of a glass fibre (44).

13. Measurement arrangement according to claim 12, **characterised in that** the collimator (42) is accommodated in a sleeve (43) inside of the hollow cylindrical body (12) for alignment of the collimator (42).

14. Rotary wing aircraft with a measurement arrangement according to one of claims 4 to 13, **characterised in that** the measurement arrangement is used for determining the mast moment of the main rotor mast.

## Revendications

1. Procédé de détermination sans contact de forces et/ou de moments agissant sur un corps cylindrique creux (12), dans lequel
- au moyen d'une source de lumière (20, 38, 40), un rayonnement de lumière est produit à l'intérieur du corps cylindrique creux (12),
- au moyen d'un capteur optoélectronique (22, 34), des signaux de mesure sont enregistrés,
- les signaux de mesure enregistrés par le capteur optoélectronique (22, 34) sont fournis à une unité de traitement de signal (26)
- des modifications des signaux de mesure par rapport à un état initial déterminé précédemment par un étalonnage, correspondant à un état initial non déformé du corps cylindrique creux (12), sont détectées et délivrées par l'unité de traitement de signal (26),
- en présence d'une déformation mécanique du corps cylindrique creux (12), selon une fonction d'étalonnage ou une règle de calcul, un signal de sortie est délivré par l'unité de traitement de signal (26) qui décrit les forces et/ou les moments occasionnant la déformation mécanique du corps cylindrique creux (12),
la détermination des forces et/ou des moments étant exécutée sur un corps cylindrique creux (12) rotatif et en utilisant un photodétecteur (22) et un module laser (20) qui sont disposés respectivement sur un couvercle obturant le corps cylindrique creux (12).

2. Procédé selon la revendication 1, **caractérisé en ce qu'**une relation entre la déformation du corps cylindrique creux (12) et les forces et/ou moments occasionnant la déformation est déterminée par une fonction d'étalonnage déterminée expérimentalement ou par une règle de calcul analytique ou numérique.

3. Procédé selon la revendication 1, **caractérisé en ce que** la mesure des signaux de mesure par l'unité de traitement de signal (26) est exécutée au moyen d'un traitement d'image numérique.

4. Dispositif de mesure pour exécuter le procédé selon l'une quelconque des revendications précédentes, comprenant :
- un détecteur optoélectronique (22, 34),
- une source de lumière (20, 38, 40),
- une unité de traitement de signal (26),
- une source d'énergie (28), et
- des moyens de transmission du signal et/ou d'alimentation électrique (31) entre la source d'énergie (28), l'unité de traitement de signal (26), la source de lumière (20, 38, 40) et le détecteur optoélectronique (22, 34),
dans lequel le détecteur optoélectronique est conçu sous forme d'un photodétecteur (22) et la source de lumière sous forme d'un module laser (20) doté d'une diode laser intégrée, le photodétecteur (22) étant disposé à une première extrémité (24) du corps cylindrique creux (12) et le module laser (20) étant disposé à une extrémité opposée, à chaque fois à l'intérieur du corps cylindrique creux (12), et un rayon de lumière émis par le module laser (20) étant orienté directement sur le photodétecteur (22) et le photodétecteur (22) et le module laser (20) étant disposés respectivement sur un couvercle obturant le corps cylindrique creux (12).

5. Dispositif de mesure selon la revendication 4, **caractérisé en ce que** l'unité de traitement de signal (26) comprend une unité de traitement d'image numérique.

6. Dispositif de mesure selon la revendication 4, **caractérisé en ce que** le détecteur optoélectronique est conçu sous forme d'un photodétecteur (22) et la source de lumière est conçue sous forme d'un mode laser (20) et ceux-ci sont disposés respectivement à l'extérieur du corps cylindrique creux (12), et **en ce qu'**un miroir (30) est disposé à l'intérieur de la première extrémité (24) du corps cylindrique creux, le photodétecteur (22), le module laser (20) et le miroir (30) étant agencés l'un par rapport à l'autre de telle sorte qu'un rayon de lumière émis par le module laser (20) apparaît sur le photodétecteur (22) seulement après une réflexion sur le miroir (30).

7. Dispositif de mesure selon la revendication 6, **caractérisé en ce que** dans la zone du module laser (20), un autre réflecteur (32) est disposé, par lequel un rayon de lumière émis par le module laser (20) peut être détourné vers le miroir (30).

8. Dispositif de mesure selon la revendication 4, **caractérisé en ce qu'**un motif/trame est disposé à une extrémité (24) à l'intérieur du corps cylindrique creux (12) et le détecteur optoélectronique est conçu sous forme d'une caméra (34) comportant un capteur CCD ou CMOS, la source de lumière (38) étant disposée à l'intérieur ou à l'extérieur et la caméra (34) étant disposée à l'extérieur du corps cylindrique creux (12).

9. Dispositif de mesure selon la revendication 8, **caractérisé en ce que** la source de lumière (40) est disposée à l'intérieur du corps cylindrique creux (12), et la source de lumière et le motif/trame forment une unité modulaire.

10. Dispositif de mesure selon la revendication 9, **caractérisé en ce que** le motif/trame est constitué d'un matériau luminescent.

11. Dispositif de mesure selon la revendication 10, **caractérisé en ce que** le motif/trame est constitué de tritium.

12. Dispositif de mesure selon la revendication 4, **caractérisé en ce que** le détecteur optoélectronique est conçu sous forme d'un photodétecteur (22) et la source de lumière est conçue sous forme d'un module laser (20) comportant une diode laser intégrée, le photodétecteur (22) et le module laser (20) étant disposés à une première extrémité (24) du corps cylindrique creux (24) sur un couvercle (41) obturant le corps cylindrique creux (12), le photodétecteur (22) et le module laser (20) étant disposés à l'intérieur du corps cylindrique creux (12), et **en ce qu'**un collimateur (42) est disposé à une extrémité opposée, à l'intérieur du corps cylindrique creux (12), le collimateur (42) étant relié par une fibre de verre (44) au module laser (20).

13. Dispositif de mesure selon la revendication 12, **caractérisé en ce que** le collimateur (42) est logé dans une douille (46) à l'intérieur du corps cylindrique creux (12) permettant d'aligner le collimateur (42).

14. Giravion doté d'un dispositif de mesure selon l'une quelconque des revendications 4 à 13, **caractérisé en ce que** le dispositif de mesure est utilisé pour déterminer le moment de mât du mât de rotor principal.
